Europäisches Patentamt

European Patent Office

Office européen des brevets

(19)

(11) Veröffentlichungsnummer : **0 233 462 B1**

# (12) EUROPÄISCHE PATENTSCHRIFT

(45) Veröffentlichungstag der Patentschrift :
02.05.91 Patentblatt 91/18

(51) Int. Cl.⁵ : **F27B 1/02,** C04B 2/12,
**F27B 1/22**

(21) Anmeldenummer : **87100300.0**

(22) Anmeldetag : **13.01.87**

(54) **Vorrichtung zum rekuperativen Vorwärmen von einem Kalkschachtofen oder dergleichen zugeführter Luft.**

(30) Priorität : **21.01.86 DE 3601572**

(43) Veröffentlichungstag der Anmeldung :
**26.08.87 Patentblatt 87/35**

(45) Bekanntmachung des Hinweises auf die
Patenterteilung :
**02.05.91 Patentblatt 91/18**

(84) Benannte Vertragsstaaten :
**AT BE CH DE ES FR GB GR IT LI NL SE**

(56) Entgegenhaltungen :
**DE-B- 1 014 916**
**FR-A- 1 246 618**
**FR-A- 1 440 786**
**FR-A- 2 436 346**
**US-A- 3 702 242**

(73) Patentinhaber : **Wärmestelle Steine und Erden GmbH**
**Klever Strasse 66**
**W-4000 Düsseldorf (DE)**

(72) Erfinder : **Die Erfinder haben auf ihre Nennung verzichtet**

(74) Vertreter : **Goddar, Heinz J., Dr. et al**
**FORRESTER & BOEHMERT**
**Widenmayerstrasse 4/I**
**W-8000 München 22 (DE)**

## Beschreibung

Die Erfindung betrifft eine Vorrichtung zum rekuperativen Vorwärmen von einem Kalkschachtofen od. dergl., wie Ring-oder Doppelschrägofen, zugeführter Kaltluft, insbesondere Frischluft, durch Übertragung der Wärme von in dem Kalkschachtofen erwärmter Luft, insbesondere Abgas, mit einem eine von einer Vielzahl von Wärmeaustauschrohren od. dergl. durchsetzte Kammer od. dergl. aufweisenden Rekuperator, bei dem das wärmere Abgas die Wärmeaustauschrohre und die kältere Frischluft die diese umgebenden Kammer durchströmt.

Bei Kalkschachtöfen, insbesondere Ringschachtöfen oder Doppelschrägöfen, finden häufig Rekuperatoren der vorstehend beschriebenen Art Verwendung, bei denen im Ofenschacht erhitztes Gas, in der Regel Abgas, vor dem Abführen in die Atmosphäre, ggf. aber auch vor dem Rezirkulieren in der Ofenprozeß, das im Rekuperator vorgesehene Bündel von Wärmeaustauschrohren durchströmt, wobei die die Außenfläche der Wärmeaustauschrohre umströmende Luft, die erwärmt werden soll, beispielsweise Frischluft, durch Wärmeübertragung mittels der Abgaswärme aufgeheizt wird. Beim Ringschachtofen bzw. Doppelschrägofen handelt es sich. bei dem wärmeabgebenden Gas um Abgas und bei dem wärmeaufnehmenden Gas um Luft, die für die Kalzinierung bzw. für die Verbrennung der Brennstoffe im Ofenschacht benötigt wird, jedoch werden Rekuperatoren der vorstehenden Art, auf die sich die Erfindung bezieht, ebenso wie der Rekuperator nach der Erfindung auch in allgemeinerem Sinn bei Kalkschachtöfen auch zu anderen Zwecken eingesetzt, wobei es sich aber stets darum handelt, die Wärme von die Wärmeaustauschrohre durchströmendem wärmeabgebenden Gas zum Erwärmen von die Außenfläche der Wärmeaustauschrohre umströmendem wärmeaufnehmenden Gas einzusetzen.

Rekuperatoren der vorstehend beschriebenen Art haben sich durchaus bewährt. Eine Schwierigkeit besteht aber darin, daß das die Wärmeaustauschrohre durchströmende wärmeabgebende Gas, im folgenden als Abgas bezeichnet, in Folge des Ofenprozeßes, den es vorher durchlaufen hat, in der Regel mehr oder weniger stark mit Staub od. dergl. beladen ist, der sich im Laufe der Zeit im Inneren der notwendigerweise mit verhältnismäßig kleinem Querschnitt ausgeführten Wärmeaustauschrohren absetzt. Insbesondere beim Normalbetrieb von beispieleweise Ringschachtöfen bzw. Doppelschrägofen können bei Vorhandensein von Alkalien und/oder anderen Verunreinigungen im zu kalzinierenden Kalkstein Schwierigkeiten beim Betrieb des bekannten Rekuperators auftretem. Die sich in den Wärmeaustauschrohren bildenden Ablagerungen aus den Ofengasen sind nur schwer oder überhaupt nicht ohne Beschädigung der Wärmeaustauschrohre zu beseitigen. Bislang müssem die Wärmeaustauschrohre des Rekuperators in den meisten Fällen etwa alle drei bis vier Wochen gereinigt werden, wobei oft mehrere der wärmeübertragenden hoch hitzebeständigen Wärmeaustauschrohre zerstört werden und daher für die weitere Wärmeübertragung nicht mehr zur Verfügung stehen. Unterbleibt eine derartige rechtzeitige Reinigung, so gestaltet sich die Reinigungsprozedur besonders zeitaufwendig und ist mit wesentlich höherem Risiko hinsichtlich der Möglichkeit einer mechanischen Zerstörung von Wärmeaustauschrohren Während der Reinigung behaftet. Außerdem führt ein Aufschieben der notwendigen Reinigung zu einer drastischen Beeinträchtigung der effizienten Wärmeübertragung im Rekuperator.

Es ist zwar bereits versucht worden, die vorstehend beschriebenen Ablagerungen in den Wärmeaustauschrohren des Rekuperators dadurch zu verringern, daß die Eintrittstemperatur des Abgases in den Rekuperator abgesenkt wird, jedoch führt dies zusätzlich zu der erwünschten Verringerung der Ansatzbildung in den Wärmeaustauschrohren naturgemäß zu einer Verscblechterung der Wirtschaftlichkeit der Ofenanlage und bat nichtsdestoweniger oft auch keine wesentliche Verlängerung der Lebensdauer der wärmeaustauschenden Rohre zur Folge.

Der Erfindung liegt daher die Aufgabe zugrunde, die erfindungsgemäße Vorrichtung dahingehend weiterzubilden, daß die mit der Ansatzbildung bzw. Ablagerung von festen Abgasbestandteilen od. dergl. in den Wärmeaustauschrohren verbundenen Probleme reduziert, vorzugsweise vollständig behoben werden.

Erfindungsgemäß wird dies bei einer Vorrichtung der gattungsgemäßen Art dadurch gelöst, daß einem die abgasdurchströmten Wärmeaustauschrohre aufweisenden Hauptrekuperator ein Vorrekuperator mit einer von Wärmeaustauschrohren od. dergl. durchsetzten Kammer vorgeschaltet ist, bei dem das Abgas die Kammer und die Kaltluft die Wärmeautauschrohre durchströmt.

Eine besondere Ausführungsform der Erfindung sieht vor, daß die wärmeaustauschende Fläche des Vorrekuperators kleiner ist als die wärmeaustauschende Fläche des Hauptrekuperators.

Dabei kann auch vorgesehen sein, daß das Verbältnis der wärmeaustauschenden Fläche des Vorrekuperators zu derjenigen des Hauptrekuperators ca. 1 : 4 beträgt.

Weiterhin schlägt die Erfindung vor, daß der Vorrekuperator eine Einrichtung zum bedarfsweisen Reinigen der vom Abgas umströmten Außenfläche der Wärmeaustauschrohre von Ablagerungen aufweist.

Dabei kann so vorgegangen werden, daß die Reinigungseinrichtung automatisch in einstellbaren Zeitintervallen arbeitet.

Eine weitere Ausführungsform der Erfindung sieht vor, daß die Reinigungseinrichtung einen Druckbehälter od. dergl. aufweist, aus dem stoßartig intervallweise ein gasförmiges Reinigungsfluid, wie Luft, in die Kammer des Vorrekuperators zur Expansion bringbar ist.

Auch kann erfindungsgemäß vorgesehen sein, daß der Druckbehälter automatisch geregelt mit unter Druck stehendem Reinigungsfluid nachfüllbar ist.

Die Erfindung schlägt weiterhin vor, daß die Kammer des Vorrekuperators mit einer Schleuse od. dergl. zum Abführen der abgereinigten Ablagerungen versehen ist.

Dabei kann schließlich vorgesehen sein, daß die Schleuseneinrichtung automatisch in einstellbaren Zeitintervallen arbeitet.

Der Erfindung liegt die überraschende Erkenntnis zugrunde, daß es dadurch, daß der bekannte Rekuperator in einen Vorrekuperator und einen Hauptrekuperator unterteilt wird, bei dem die staub- und alkalibehafteten Abgase im Vorrekuperator um die Wärmeaustauschrohre strömen, im Hauptrekuperator hingegen nach Verlassen des Vorrekuperators wie bisher durch die Wärmeaustauschrohre strömen, gelingt, die Bildung von Staubablagerungen in den Wärmeaustauschrohren vollständig zu vermeiden. Lediglich innerhalb des Vorrekuperators bilden sich nämlich Staubablagerungen, dort aber naturgemäß an der Außenseite der Wärmeaustauschrohre, wodurch eine leichte und wirkungsvolle Reinigung möglich ist, die während eines ungestörten Ofenbetriebes bei größtmöglicher Schonung der Wärmeaustauschrohre vorzugsweise automatisch, d. h. ohne Zuhilfenahme von kostenaufwendigem Personal, stattfinden kann. Die automatische Reinigung des Wärmeauschrotauschrobündels des Vorrekuperators erfolgt dabei vorzugsweise mittels eines plötzlich in die das Wärmeaustauschrohrbündel umgebende Kammer hineinexpandierenden gasförmigen Mediums, z.B. Luft, das bzw. die aus einem außen an das Gehäuse des Vorrekuperators angesetzten Vorratsdruckbehälter stammen kann. Aus der vorzugsweise vorgesmhenen Schleuseneinrichtung wird der im Vorrekuperator abgereinigte Staub über entsprechende Schleusenauslässe aus dem Gehäuse des Vorrekuperators mittels geeigneter Förderorgane abgeführt.

Weitere Merkmale und Vorteile der Erfindung ergeben sich aus der nachstehenden Beschreibung, in der ein Ausführungsbeispiel anhand der schematischen Zeichnung im einzelnen erläutert ist.

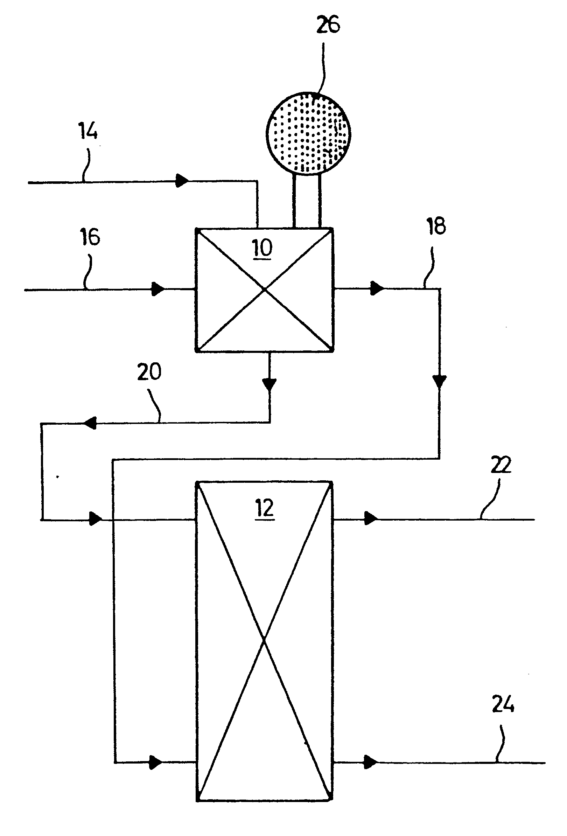

Dabei zeigt die aus einer einzigen Figur bestehenden Zeichnung ein Flußschema einer Vorrichtung nach der Erfindung.

Wie die Zeichnung erkennen läßt, weist die erfindungsgemäße Vorrichtung bei dem dort gezeigten Ausführungsbeispiel einen Vorrekuperator 10 und einen Hauptrekuperator 12 auf. In den Vorrekuperator 10, der von nicht gezeigten Wärmeaustauschrohren durchsetzt ist, führt ein wärmeabgebendes Abgas heranführender Abgaseintritt 14, der das wärmeabgebende Abgas in die die Wärmeaustauschrohre des Vorrekuperators 10 umgebende Kammer leitet, während ein Kaltlufteintritt 16 wärmeaufnehmendes Gas, welches naturgemäß frei von Staublast etc. ist, in das Wärmeaustauschrohrbündel des Vorrekuperators 10 leitet.

Vom Vorrekuperator 10 führt eine mit den Inneren des Wärmeaustauschrohrbündels des Vorrekuperators 10 verbundene Frischluftleitung 18 zum Hauptrekuperator 12 und stebt mit der das dort vorgesehene Wärmeaustauschrohrbündel umgebenden Kammer des Hauptrekuperators 12 in Verbindung. Ein Abgasleitung 20 steht einerseits mit der das Wärmeaustauschrohrbündel des Vorrekuperators 10 umgebenden Kammer und anderseits mit dem Inneren des Wärmeaustauschrohrbündels des Hauptrekuperators 12 in Verbindung. Aus dem Hauptrekuperator 12 führen ein Frischluftaustritt 22 für erwärmte Frischluft, mit der das Wärmeaustauschrohrbündel des Hauptrekuperators 12 umgebenden Kammer in Verbindung stehend, und ein Abgasaustritt 24 fort, der mit den inneren des Wärmeaustauschrohrbündels des Hauptrekuperators 12 verbunden ist. An das Gehäuse des Vorrekuperators 10 ist ein Druckbehälter 26 angeschlossen, der automatisch mit unter Druck stehender Luft nachfüllbar ist.

Die vorstehend beschriebene Vorrichtung arbeitet wie folgt :

Aus dem Ofenprozeß stammendes heißes Abgas gelangt durch den Abgaseintritt 14 in die das Wärmeaustauschrohrbündel des Vorrekuperators 10 umgebende Kammer, gibt dort einen Teil seiner Wärme an die über den Kaltlufteintritt 16 in das Innere des Wärmeaustauschrohrbündels des Vorrekuperators 10 gelangende und die Wärmeaustauschrohre durchströmende Kaltluft ab, strömt dann weiter durch die Abgasleitung 20 und gelangt schließlich in das Innere des Wärmeaustauschrohrbündels des Hauptrekuperators 12, wo es seine Restwärme an die die Kammer des Hauptrekuperators 12 durchströmende, diesem über die Frischluftleitung 18 zugeführte, im Vorrekuperator 10 bereits vorerwärmte Frischluft abgibt und den Hauptrekuperator 12 schließlich über den Abgasaustritt 24 verläßt. Die Kaltbzw. Frischluft, die über den Kaltlufteintritt 16 herangeführrf wird, durchströmt das Innere der Wärmeaustauschrohre des Vorrekuperators 10, gelangt dann in bereits erwärmter Form über die Frischluftleitung 18 in die Kammer des Hauptrekuperators 12 und tritt nach endgültiger Erwärmung über den Frischluftaustritt 22 des Hauptrekuperators 12 aus, woraufhin sie in den Ofenprozeß in der gewünschten Form eingeführt werden kann. Erfindungswesentlich ist, daß bei der beschriebenen Vorgehensweise die Staublast des über den Abgaseintritt 14 herangeführten Abgases an der Außenseite der Wärmeaustauschrohre des Vorrekuperators 10 abgelagert wird und von dort leicht automatisch durch stoßweises periodisches Expandieren der im Druckbehälter 26 vorhandenen Druckluft mittels geeigneter Schleuseneinrichtungen etc. ausgetragen werden kann.

Vorteilhaft ist bei der beschriebenen Arbeitsweise, bei der also in neuartiger Weise dem Hauptrekuperator ein Vorrekuperator vorgeschaltet ist, wobei die Abgase im Vorrekuperator nicht durch die Wärmeaustauschrohre, sondern um die Wärmeaustauschrohre herumgeführt werden, daß staubförmige Stoffe im Abgas schon an der Außenseite des Wärmeaustauschrohrbündels des Vorrekuperators 10 niedergeschlagen werden, so daß kein Niederschlag mehr innerhalb der empfindlichen Wärmeaustauschrohre des Hauptrekuperators 12 erfolgen kann, die staubförmigen Stoffe, da sie sich ja an den Rohraußenflächen der Wärmeaustauschrohre des Vorrekuperators 10 abscheiden, generell einfach und ohne Gefahr von Rohrbrüchen abgereinigt werden können, und schließlich die Abreinigung automatisch, wie bereits beschrieben, erfolgen kann, mit dem Vorteil, daß die Rekuperatoranlage niemals außer Betrieb genommen werden muß, während bislang bei der Reinigung von Rekuperatoren, in denen die wärmeabgebenden Gase sogleich die Wärmeaustauschrohre innen durchströmen, die Anlage für die sich oft über mehrere Stunden hinziehende Reinigung außer Betrieb genommen werden mußte, woraus Produktionsausfall und andere Unannehmlichkeiten resultierten.

## Ansprüche

1. Vorrichtung zum rekuperativen Vorwärmen von einem Kalkschachtofen od. dergl., wie Ring- oder Doppelschrägofen, zugeführter Kaltluft, insbesondere Frischluft, durch Übertragung der Wärme von in dem Kalkschachtofen erwärmter Luft, insbesondere Abgas, mit einem eine von einer Vielzahl von Wärmeaustauschrohren od. dergl. durchsetzte Kammer od. dergl. aufweisenden Rekuperator, bei dem das wärmere Abgas die Wärmeaustauschrohre und die kältere Frischluft die diese umgebende Kammer durchströmt, dadurch gekennzeichnet, daß einem die abgasdurchströmten Wärmeaustauschrohre aufweisenden Hauptrekuperator (12) ein Vorrekuperator (10) mit einer von Wärmeaustauschrohren od. dergl. durchsetzten Kammer vorgeschaltet ist, bei dem das Abgas die Kammer und die Kaltluft die Wärmeaustauschrohre durchströmt.

2. Vorrichtung nach Anspruch 1, dadurch gekennzeichnet, daß die wärmeaustauschende Fläche des Vorrekuperators (10) kleiner ist als die wärmeaustauschende Fläche des Hauptrekuperators (12).

3. Vorrichtung nach Anspruch 2, dadurch gekennzeichnet, daß das Verhältnis der wärmeaustauschenden Fläche des Vorrekuperators (10) zu derjenigen des Hauptrekuperators, (12) ca. 1 : 4 beträgt.

4. Vorrichtung nach einem der vorangehenen Ansprüche, dadurch gekennzeichnet, daß der Vorrekuperator (10) eine Einrichtung (16) zum bedarfsweisen Reinigen der vom Abgas umströmten Außenfläche der Wärmeaustauschrohre von Ablagerungen aufweist.

5. Vorrichtung nach Anspruch 4, dadurch gekennzeichnet, daß die Reinigungseinrichtung (26) automatisch in einstellbaren Zeitintervallen arbeitet.

6. Vorrichtung nach Anspruch 4 oder 5, dadurch gekennzeichnet, daß die Renigungseinrichtung einen Druckbehälter (26) od. dergl. aufweist, aus dem stoßartig intervallweise ein gasförmiges Reinigungsfluid, wie Luft, in die Kammer des Vorrekuperators (10) zur Expansion bringbar ist.

7. Vorrichtung nach Anspruch 6, dadurch gekennzeichnet, daß der Druckbehälter (26) automatisch geregelt mit unter Druck stehendem Reinigungsfluid nachfüllbar ist.

8. Vorrichtung nach einem der Ansprüche 4 bis 7, dadurch gekennzeichnet, daß die Kammer des Vorrekuperators (10) mit einer Schleuse od. dergl. zum Abführen der abgereinigten Ablagerungen versehen ist.

9. Vorrichtung nach Anspruch 8, dadurch gekennzeichnet, daß die Schleuseneinrichtung automatisch in einstellbaren Zeitintervallen arbeitet.

## Claims

1. An apparatus for the recuperative preheating of cool air, more particularly fresh air, supplied to a shaft kiln for lime or the like such as a ring kiln or a double inclined kiln, by the transfer of heat from air, more particularly waste gas, which has been heated in the kiln, the apparatus having a recuperator having a chamber through which a large number of heat exchange tubes or the like extend, the relatively warm waste gas flowing through the heat exchange tubes and the relatively cool fresh air flowing through the chamber which stands around the tubes, characterised in that pre-recuperator (10) having a chamber through which heat exchange tubes or the like extend precedes a main recuperator (12) having the heat exchange tubes flowed through by the waste gas and in the pre-recuperator (10) the waste gas flows through the chamber and the cool air through the heat exchange tubes.

2. An apparatus according to claim 1, characterised in that the heat exchange area of the pre-recuperator (10) is less than the heat exchange area of the main recuperator (12).

3. An apparatus according to claim 2, characterised in that the ratio of the heat exchange area of the prerecuperator (10) to the heat exchange area of the main recuperator (12) is approximately 1 : 4.

4. An apparatus according to any of the previous claims, characterised in that the pre-recuperator (10) has means (26) for as-required cleaning of the waste-gas-contacting outside surface of the heat exchange tubes to remove deposits.

5. An apparatus according to claim 4, characterised in that the cleaning means (26) operate automatically at adjustable time intervals.

6. An apparatus according to claim 4 or 5, characterised in that the cleaning mean have a pressure tank (26) from which a gaseous cleaning fluid such as air can be ejected pulsewise at intervals to the pre-recuperator chanber for expansion.

7. An apparatus according to claim 6, characterised in that the pressure tank (26) can be topped up with pressurized cleaning fluid under automatic control.

8. An apparatus according to any of claims 4 to 7, characterized in that the pre-recuperator chamber (10) has a look or the like for the removal of the cleaned-off deposits.

9. An apparatus according to claim 8, characterised in that the look means operate automatically at adjustable time intervals.

## Revendications

1. Dispositif pour le préchauffage à récupération de l'air froid, notamment de l'air neuf, injecté dans un four à cuve pour chaux ou un four similaire tel que four annulaire ou four oblique double, par transmission de la chaleur de l'air chauffé dans le four à cuve pour chaux, notamment des gaz brûlés, avec un récupérateur comportant une chambre ou similaire traversée par un grand nombre de tubes d'échange de chaleur ou similaires, les gaz brûlés chauds s'écoulant dans les tubes d'échange de chaleur et l'air neuf plus froid s'écoulant dans la chambre entourant ces tubes, caractérisé en ce qu'un prérécupérateur (10) présentant une chambre traversée par des tubes d'échange de chaleur ou similaires est monté devant un récupérateur principal (12) comportant les tubes d'échange de chaleur parcourus par les gaz brûlés, ces gaz brûlés s'écoulant dans la chambre du prérécupérateur, tandis que l'air froid s'écoule dans les tubes d'échange de chaleur de ce prérécupérateur.

2. Dispositif selon la revendication 1, caractérisé en ce que la surface d'échange de chaleur du prérécupérateur (10) est inférieure à la surface d'échange de chaleur du récupérateur principal (12).

3. Dispositif selon la revendication 2, caractérisé en ce que le rapport de la surface d'échange de chaleur du prérécupérateur (10) à celle du récupérateur principal (12) est sensiblement égale à 1 :4.

4. dispositif selon l'une des revendications précédentes, caractérisé en ce que le prérécupérateur (10) comporte un dispositif (26) pour le nettoyage en cas de besoin de la surface extérieure des tubes d'échange de chaleur balayée par les gaz brûlés, pour la débarrasser des dépôts.

5. Dispositif selon la revendication 4, caractérisé en ce que le dispositif de nettoyage (26) fonctionne automatiquement à des intervalles de temps réglables.

6. Dispositif selon la revendication 4 ou 5, caractérisé en ce que le dispositif de nettoyage comporte un réservoir sous pression (26) ou similaire, à partir duquel on peut envoyer par saccades, à intervalles, un fluide de nettoyage gazeux tel que l'air dans la chambre du prérécupérateur (10) pour qu'il s'y détende.

7. dispositif selon la revendication 6, caractérisé en ce que le réservoir sous pression (26) peut être rempli par régulation automatique avec du fluide de nettoyage sous pression.

8. dispositif selon l'une des revendications 4 à 7, caractérisé en ce que la chambre du prérécupérateur (10) est munie d'un sas ou similaire pour l'évacuation des dépôts enlevés par nettoyage.

9. Dispositif selon la revendication 8, caractérisé en ce que le dispositif à sas fonctionne automatiquement à des intervalles de temps réglables.